# EUROPEAN PATENT APPLICATION

(11) **EP 2 006 551 A1**
(43) Date of publication of application: **24.12.2008**
(21) Application number: 08010950.7
(22) Date of filing: 17.06.2008
(51) Int. Cl.: F16B 13/14

(54) **A chemical dowel**

(30) Priority: 21.06.2007 FR 0704448
(71) Applicant: SOCIETE DE PROSPECTION ET D'INVENTIONS TECHNIQUES SPIT, 26501 Bourg-Les-Valence Cédex (FR)
(72) Inventor: Bucquet Barbara, 26000 Valence (FR); Gauthier Alain, 07300 Saint Jean de Muzols (FR)
(74) Representative: Bloch, Gérard

(57) **Abstract**

A chemical dowel intended to be introduced into a receiving material (18) and for receiving a securing member (22;23) for securing a part to the receiving material, comprising a tubular sieve (1), intended to be impregnated with a curing product for anchoring the dowel into the receiving material, and a sieve supporting bushing (2), provided with side openings (11), characterized in that the sieve (1) is a sleeve made of a compressible and elastic material extending outside the bushing (2) and there is provided, at the dowel introduction distal end (14), a sieve (1) nipping ring (15) for having it slide and facilitating the introduction into the receiving material without tearing it.

## Description

This invention relates to chemical dowels. These can be used in hollow materials and in solid materials.

Such dowels are intended to secure to the material a securing member onto which a part will be fixed later on. As a securing member, a threaded stem or a screw could be often considered.

In solid materials, a hole is preliminarily bored and then a polymerizable resin capsule is introduced therein, wherein a small stick of curing agent is embedded. A threaded stem, provided with a boring head, is finally introduced in percussion-rotation for being anchored therein after the resin has cured.

The capsule resin is loaded with a powdered material type such as sand, talc, ...

In hollow materials, a hole is also bored in the wall(s), allowing for a retaining body in a polymerizable resin mass to pass therein, which, after curing, comes into abutment on the rear side of the wall. This could be a body of an umbrella or tubular sieve type.

While chemical dowels have qualities being inherent to chemical embeddings, however they are not defectless.

They do not have perfect application flexibility. Manufacturing them is not simple either and their cost could be deterrent.

Patent U.S. 6,837,018 discloses a chemical dowel comprising a tubular sieve, intended to be impregnated with a curing product for anchoring the dowel into a receiving material, and a supporting bushing provided with side openings and inside which the tubular sieve extends being thus supported by the bushing.

When a threaded stem is being introduced in such a prior art dowel, parts of the sieve are pushed out of the supporting bushing through the side openings thereof so that, after such a radial expansion and after curing material has been injected, the dowel is anchored.

However, the sieve expansion is not inevitably satisfactory for being sure of the anchoring operation.

The invention according to the present application aims at preventing any risk of a bad anchoring operation.

Thus, this invention relates to a chemical dowel intended to be introduced into a receiving material and for receiving a securing material for securing a part to the receiving material, comprising a tubular sieve, intended to be impregnated with a curing product for anchoring the dowel into the receiving material, and a sieve supporting bushing, provided with side openings, characterized in that the sieve is a sleeve made of a compressible and elastic material extending outside the bushing and there is provided, at the dowel introduction distal end, a sieve nipping ring for having it glide therethrough and facilitating its introduction into the receiving material without tearing it.

By means of the sieve being arranged outside the bushing, as well as its composition, anchoring is ensured by the sieve throughout its radial dimension, with no risk. When the dowel is being positioned, the sieve, passing through the nipping ring retained in the receiving material hole, is first effectively nipped, then, when going out, naturally expands for reassuming its rest radial dimension, being as large as desired.

When the dowel is being positioned, the sieve nipping ring; maintained in the receiving material hole, moves quite axially along the supporting bushing, from its introduction distal end to its abutment proximal end on the receiving material, advantageously provided, to this end, with an abutment collar.

In order that, when the ring is sliding on the bushing, with interposition of the sieve sleeve, the bushing easily comes out, the side openings of the supporting bushing extend longitudinally in the side wall of the bushing between its two proximal and distal ends.

Advantageously, the sieve sleeve is secured to the support bushing at the dowel introduction distal end, preferably by means of a plug introduced into the bushing and nipping part of an upside down edge portion of the sieve sleeve.

This invention will be better understood through the following description of the preferred embodiment of the dowel, referring to the accompanying drawing, on which:
- Fig. 1 is a front view of the dowel;
- Fig. 2 is an axial sectional view of the dowel on Fig. 1;
- Fig. 3 is a front view of a female securing bushing intended to be introduced into the dowel;
- Fig. 4 is a front view of a male securing stud intended to be introduced into the dowel;
- Fig. 5 is an axial sectional view of the dowel being positioned on a building rubble stone;
- Fig. 6 is an axial sectional view of the dowel, once positioned on the rubble stone on Fig. 5; and
- Fig. 7 is an axial sectional view of the dowel on Fig. 1, once positioned on a brick with several walls.

The dowel as illustrated in the drawing comprises a sieve sleeve 1 and a supporting bushing 2.

The sieve sleeve 1 is an axis tubular member 6 made in an open cell foamed, compressible and elastic material.

It could be made of foam, sponge, wool, felt, wadding or any similar absorbing material able to be impregnated with a curing product, generally a blend of a polymerizable resin and a curing agent.

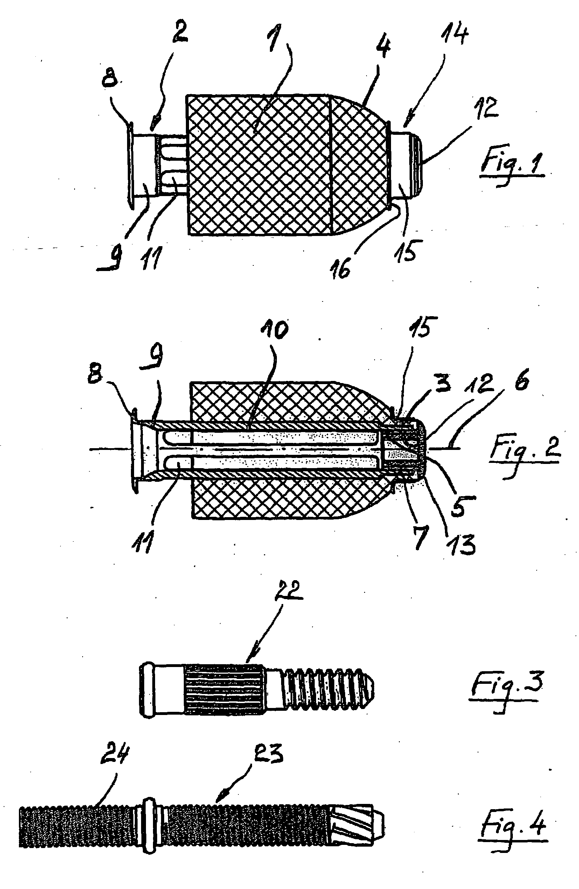

Near its introduction distal end 3, the sieve sleeve 1 progressively shrinks for showing an external substantially frustoconical bulged surface 4, with an upside down edge portion 5 (Fig. 2), for being secured to the supporting-bushing 2 as explained hereinbelow.

The supporting bushing 2 is a tubular member with the same axis 6 as the sieve sleeve 1, but longer than the sleeve 1 with a length substantially equal to the thickness of a rubble stone onto which the dowel is intended to be positioned, as it will be described hereinafter.

The bushing 2 comprises an introduction distal end portion 7, with the wall thereof being slightly tapered with respect to that 10 of the remainder of the bushing and an abutment collar 8 at the very end of its other proximal end portion 9.

The wall 10 of the bushing is perforated with side openings11 extending longitudinally between its two distal 7 and proximal 9 end portions.

The sieve sleeve 1 is secured to the supporting bushing 2 at their introduction distal ends. The end edging portion 5 of the sleeve 1 is arranged upside down inside the end portion 7 of the wall of the bushing 2 and is nipped against the interior of the end wall through a plug 12, slightly forcibly introduced into the bushing until abutting against the bushing edge, thus covered by a sleeve layer, of a small abutment collar 13.

The sleeve 1 is therefore mounted outside the bushing 2, acting as a support thereof, the internal diameter of the sleeve being substantially equal to the external diameter of the bushing.

At the dowel introduction distal end 14, there is provided a ring 15 for nipping the sieve sleeve 1 so as to have it slide therethrough and prevent it from being torn when the dowel is being positioned, under the hereinafter described conditions.

The nipping and sliding ring 15 is a small tubular member provided, on the side opposite to the introduction end, with a small annular abutment shoulder 16, the ring being slid on the introduction distal end portion 3 of the sieve sleeve 1, before being secured to the bushing 2 through the plug 12.

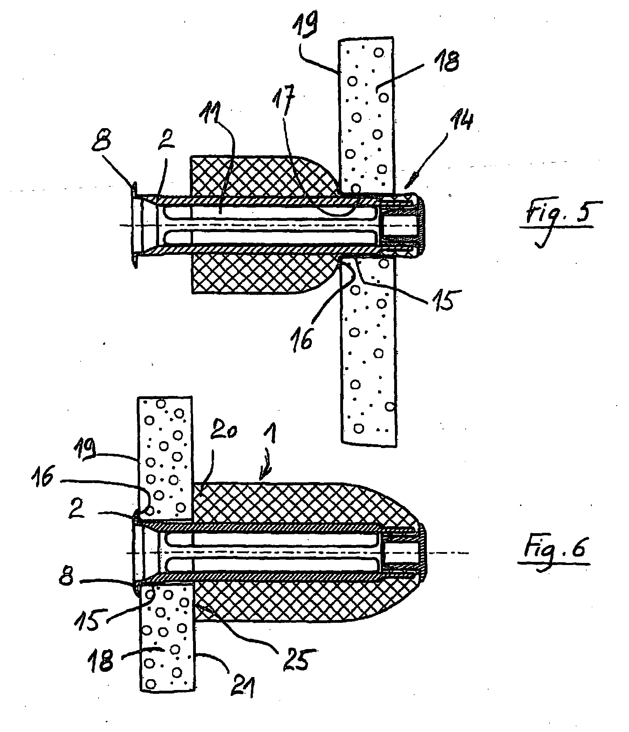

Positioning the dowel on a hollow receiving material, here a rubble stone, will be now described, referring to Figs. 5, 6.

After having bored a hole 17 in the rubble stone wall 18, the end distal portion 14 of the dowel is introduced into the hole, so as to place the collar 16 of the sliding ring 15 in abutment against the external surface 19 of the rubble stone wall. With this respect, it is to be noticed that the hole will have been bored with a diameter substantially equal to the external diameter of the ring 15. Then, the bushing 2 is pushed into the hole, driving with it, through their distal end portions, the sieve sleeve 1 being nipped between the wall 10 of the bushing 2 and the nipping ring 15, the nipping, or compression area, of the sleeve 1 extending along the bushing 2 until the abutment collar 8 of the bushing 2 coming in abutment against the external surface 19 of the rubble stone, or more precisely, against the shoulder 16 of the ring 15. The extension of the nipping area of the sleeve 1 has been facilitated by the flexibility and the pliability and, hence the retraction of the wall 10 of the bushing 2 by means of the longitudinal openings thereof 11. Then, the sleeve 1, because of its natural expansion, has returned to its origin and rest shape and provides between itself and the abutment collar 8 of the bushing a length substantially corresponding to the thickness of the rubble stone (Fig. 6). Accordingly, the proximal part 20 of the sleeve 1. is substantially in rear abutment throughout its radial dimension against the internal surface 21 of the wall 18 of the rubble stone. When the dowel is being pushed into the wall of the rubble stone, the sieve has slid without any tearing along the ring 15.

After the dowel has been positioned, through the opening in the proximal part of the bushing 2, a resin and a curing agent are injected, which, through the longitudinal openings 11 of the bushing 2 and because of the foamed nature of the sieve sleeve 1, impregnate the sleeve 1 for curing it and create at the rear of the rubble stone wall a retaining and securing annular shoulder 25.

Before the resin is cured, a securing member is introduced into the bushing, for example, the female bushing 22 on Fig. 3, intended to receive a securing screw of the part to be secured, or the male stud 23 of Fig. 4, intended to receive a securing nut on its securing threaded part 24. After the resin is polymerized, the securing member 22, 23 is being anchored into the dowel body, embedded in the cured resin.

The sleeve is here secured to the bushing by having an edge portion being upside down in the bushing and through blocking by a plug. There could even be contemplated securing through gluing, welding or even hooping.

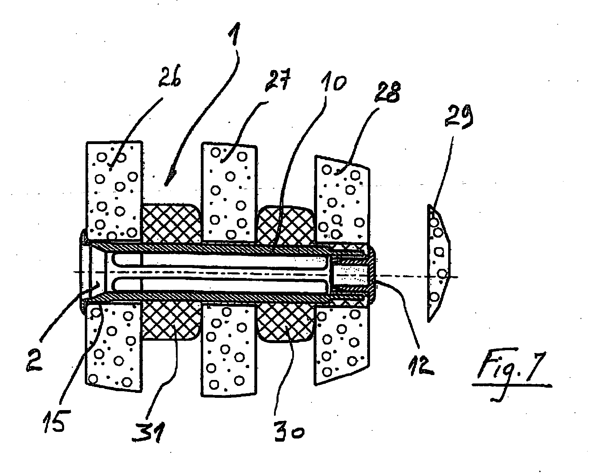

Fig. 7 illustrates the way of positioning the dowel of the invention in a brick provided with a plurality of walls 26-28. Positioning occurs as previously described, the only difference being that, still by means of the natural expansion thereof, the sleeve 1 returns back to its original and rest position in intermediate portions 30, 31 interposed between two adjacent walls'27, 28 and 26, 27. It is to be noticed that the second expanded portion 31 of the sleeve is the one being in rear abutment against the external wall 26 of the brick, as previously for the rubble stone.

It should be still noticed that the length of the dowel is such that it does not cooperate with the internal wall 29 of the brick. Anchoring thereof is only made on the first three walls 26-28.

## Claims

1. A chemical dowel intended to be introduced into a receiving material (18) and for receiving a securing member (22; 23) for securing a part to the receiving material, comprising a tubular sieve (1), intended to be impregnated with a curing product for anchoring the dowel into the receiving material, and a sieve supporting bushing (2), provided with side openings (11), **characterized in that** the sieve (1) is a sleeve made of a compressible and elastic material extending outside the bushing (2) and there is provided, at the dowel introduction distal end (14), a sieve (1) nipping ring (15) for having it slide and facilitating the introduction into the receiving material without tearing it.

2. A chemical dowel according to claim 1, wherein the supporting bushing (2) comprises at the proximal end (9) thereof an abutment collar (8).

3. A dowel according to one of claims 1 and 2, wherein the side openings (11) of the supporting bushing (2) extend longitudinally in the side wall (10) of the bushing between the two proximal (9) and distal (7) ends thereof.

4. A dowel according to one of claims 1 to 3, wherein the sieve sleeve (1) is secured to the supporting bushing (2) at the introduction distal end of the dowel (14).

5. A dowel according to claim 4, wherein the sieve sleeve (1) is secured to the supporting bushing (2) by a plug (12) provided in the bushing (2) and nipping an edge portion (5) of the sleeve turned upside down inside the bushing (2).

6. A dowel according to claim 5, wherein the securing plug (12) of the sleeve (1) comprises an abutment collar (13).

7. A dowel according to one of claims 1 to 6, wherein the nipping and sliding ring (15) comprises an annular abutment shoulder (16).

8. A dowel according to one of claims 1 to 7, wherein the sieve sleeve (1) progressively shrinks in a substantially frustoconical external surface (4) near the introduction distal end thereof (3).
